# FASCICULE DE BREVET EUROPEEN

(11) **EP 0 907 457 B1**
(45) Date de publication et mention de la délivrance du brevet: **10.07.2002**
(21) Numéro de dépôt: 97921923.5
(22) Date de dépôt: 02.05.1997
(51) Int. Cl.: B23Q 3/155

(54) **DISPOSITIF D'EMMAGASINAGE DES OUTILS D'UNE MACHINE-OUTIL D'USINAGE**
VORRICHTUNG ZUM SPEICHERN VON WERKZEUGEN EINER WERKZEUGMASCHINE
STORAGE DEVICE FOR MACHINE TOOLS

(30) Priorité: 03.05.1996 FR 9605755
(43) Date de publication de la demande: 14.04.1999
(73) Titulaire: Renault Automation Comau, 92365 Meudon La Forêt Cedex (FR)
(72) Inventeur: AZEMA, André, F-81710 Saix (FR)
(74) Mandataire: Richebourg, Michel François
(86) Numéro de dépôt international: FR9700782
(87) Numéro de publication internationale: WO9741997

(56) Documents cités:
- EP-A- 0 050 797
- CH-A- 403 447
- DE-A- 3 207 141
- FR-A- 2 529 127

## Description

La présente invention concerne un dispositif d'emmagasinage des outils selon le préambule de la revendication 1 et comme connu du document US-A-4423546. L'invention concerne plus particulièrement les adaptations permettant d'assurer le changement et le rangement des outils d'une machine-outil d'usinage à grande vitesse dans les meilleures conditions.

L'usinage à grande vitesse s'opère en général à partir d'un outil entraîné en rotation par l'axe moteur d'une électro-broche installée dans un coulant lui-même monté mobile en translation selon trois axes X, Y et Z.

Une machine-outil d'usinage comporte classiquement quatre postes de travail principaux, à savoir :
- un poste d'usinage proprement dit comportant l'outil entraîné en rotation par l'axe moteur de l'électro-broche et façonnant la pièce à usiner,
- un poste d'entraînement situé en amont du poste d'usinage et constitué d'un ensemble d'organes assurant notamment les déplacements en translation suivant X, Y et Z du coulant de l'électro-broche ainsi que l'alimentation de l'électro-broche pour la rotation de son axe porte-outil,
- un poste de commande collaborant avec le poste d'entraînement et en fonction d'un programme d'instructions préétablies pour assumer les différentes phases d'usinage de ladite pièce,
- et un magasin de rangement des outils permettant de garder à proximité de la zone d'usinage les outils utilisés lors des différentes phases d'usinage de la pièce.

L'usinage classique d'une pièce est défini par une gamme d'usinage comportant des phases d'usinage successives dépendantes de la forme à façonner et qui définissent les points suivants:
- la machine à utiliser ( fraiseuse, tour d'usinage ...)
- les différents outils à utiliser ( fraise, foret, taraud ...)
- les courses de ces derniers,
- la machine à utiliser ( fraiseuse, tour d'usinage ...)
- les différents outils à utiliser ( fraise, foret, taraud ...)
- les courses de ces derniers,
- le positionnement de la pièce par rapport à l'outil.
L'usinage d'une pièce par une machine-outil d'usinage à grande vitesse est fonction du programme d'usinage élaboré par le bureau des méthodes qui détermine les phases d'usinage pendant lesquelles des outils différents usinent la pièce conformément au programme préétabli.

Ce type d'usinage nécessite à proximité de la machine-outil, la présence d'un magasin d'outils en liaison avec le coulant de la machine-outil pour assurer le stockage des outils devant être utilisés et le remplacement de ceux-ci lorsque la machine change de phase d'usinage. En outre, certaines phases d'usinage nécessitant la présence d'outils de grand diamètre, il est indispensable que le magasin d'outils puisse stocker des outils de grande dimension afin que celui-ci puisse répondre à la large diversité d'usinages que demande une pièce.

Une machine-outil d'usinage à grande vitesse doit par définition assurer le changement d'outils très rapidement afin d'éviter les temps de pause nuisant à la productivité. Le magasin a donc pour objet de mettre instantanément à disposition du coulant un logement pour permettre le rangement de l'outil de la phase d'usinage qui vient de s'achever et un outil qui sera utilisé pour la phase d'usinage suivante selon le programme préétabli.

Les outils sont chacun fixés dans un porte-outil standard à tous les outils et qui vient se loger dans l'électro-broche emmanchée dans le coulant apte à recevoir ce genre de porte-outil permettant ainsi l'utilisation d'une seule électro-broche. Ce porte-outil comporte des surfaces de référence qui assurent le positionnement axial et radial de l'outil par rapport à l'électro-broche, ces surfaces garantissant une position référence de l'outil indispensable à tout usinage et particulièrement à l'élaboration du programme. Un léger défaut au niveau de ces surfaces aurait pour conséquence un mauvais usinage et donc une mauvaise pièce ou plusieurs mauvaises pièces si le défaut n'était pas détecté rapidement. Aussi, en aucun cas, ces surfaces ne doivent être faussées ou endommagées par un quelconque choc ou rayure. Elles nécessitent donc une protection à la pollution due à l'usinage c'est à dire aux copeaux, aux jets d'huile et aux chocs, protection difficile à mettre en oeuvre en raison de la proximité du coulant. De plus, au cas où cette protection deviendrait défaillante et laisserait passer des copeaux, il est très important que ceux-ci ne s'accumulent pas dans le lieu de stockage des outils.

Un autre inconvénient de la proximité du coulant est l'impossibilité pour un manipulateur d'accéder aux outils d'un magasin lorsque la machine est en fonctionnement pour des raisons évidentes de sécurité.

On connaît le dispositif décrit et représenté dans le brevet FR-A-2 529 127 qui consiste en un carrousel porte-outil pouvant tourner à intérieur d'une enceinte ladite enceinte comportant une partie tournante afin de permettre l'accès à la broche de la machine-outil utilisant un tel magasin, aux outils et/ou aux zones portes-outils libres. Ce dispositif a néanmoins plusieurs inconvénients qui le rendent inutilisable dans une application à grande vitesse où tous les temps de retard ou auxiliaires doivent être réduits au maximum voire supprimés. L'ouverture de l'enceinte fixe est indépendante de la rotation du carrousel ce qui implique un temps d'opération supplémentaire mais aussi un composant (un moteur) supplémentaire. De plus, c'est la rotation de la broche qui assure la rotation du carrousel par un entraînement par contact direct, il faut donc obligatoirement que la broche soit en contact avec ledit carrousel pour en assurer la rotation, ce qui implique un temps de retard supplémentaire en ce que le magasin et la broche doivent d'abord se trouver proche l'un de l'autre avant d'assurer la rotation du carrousel.

Partant de cet état de fait, la demanderesse a donc mené des recherches visant à améliorer le procédé d'emmagasinage des outils d'une machine-outil d'usinage tout en obviant aux problèmes induits par l'usinage à grande vitesse.

Pour ce faire ce dispositif d'emmagasinage d'outils d'une machine-outil d'usinage disposé à proximité du coulant repose sur un concept original qui consiste en l'association :
- d'une enceinte fixe comportant une ouverture et associée au bâti de la machine-outil.
- et d'un barillet tournant dans l'enceinte fixe, entraîné en rotation par un moteur suivant un axe parallèle à l'axe du coulant et comportant une partie servant au rangement des outils utilisés par la machine-outil et une autre partie servant à l'étanchéité de l'enceinte fixe. Ainsi par le seul mouvement de rotation du barillet, le magasin peut :
   - soit mettre à disposition du coulant un logement vide au travers de l'ouverture,
   - soit mettre à disposition du coulant un logement comportant un outil logé dans son porte-outil au travers de l'ouverture,
   - soit se fermer en obturant l'ouverture de son enceinte afin de protéger son contenant de toutes les projections venant de l'usinage.

Cette caractéristique a pour autre avantage d'utiliser le barillet servant au rangement et à la préhension des outils comme organe d'étanchéité fermant l'enceinte de protection autour du barillet de façon à la rendre étanche. Aucun autre appareillage complémentaire n'est donc nécessaire pour assurer la protection des outils et des porte-outils. En outre, le fait que le coulant assure les opérations de chargement et de déchargement des outils permet d'arrêter les opérations d'usinage lors d'un changement d'outil.

Suivant un mode de réalisation préférentielle de l'invention, le susdit barillet est constitué de deux parties :
- une partie cylindrique comportant périphériquement des moyens de préhension des outils disposés à intervalle angulaire approprié,
- une partie formant volet solidaire du barillet et tournant avec celui-ci dont les dimensions sont supérieures à celles de l'ouverture réalisée dans l'enceinte.

Ainsi à chacune des rotations du moteur selon un pas égal à l'intervalle angulaire séparant lesdits moyens de préhension, le barillet présentera, face à l'ouverture de l'enceinte, un nouveau moyen de préhension disposé sur sa partie cylindrique. De même, une rotation du barillet selon un angle prédéterminé, présentera la susdite partie formant volet face à l'ouverture pratiquée dans l'enceinte, à des fins d'obturation de celle-ci.

Selon une forme de réalisation préférée de l'invention, l'ouverture réalisée dans la susdite enceinte dans laquelle évolue le barillet est latérale et se trouve du côté coulant.

Le susdit barillet adopte de préférence la forme d'une couronne partiellement coupée selon un plan recevant ledit volet, l'autre partie cylindrique de la couronne recevant périphériquement les susdits moyens de préhension. Ainsi, lorsque la partie cylindrique de la couronne est présentée face à l'ouverture, les moyens de préhension dépassent de l'enceinte, ce qui permet un accés direct du coulant auxdits moyens de préhension vides ou en prise avec des outils qui se trouvent hors de l'enceinte, et lorsque la partie coupée de la couronne est présentée face à l'ouverture, le volet s'ajuste sur celle-ci, fermant l'enceinte.

Ainsi, selon l'angle de rotation du barillet, soit les moyens de préhension sortent de l'enceinte avec ou sans outils, le coulant de la machine-outil pouvant assurer les opérations de déchargement et de chargement d'outils, soit l'enceinte est fermée par le volet et la machine-outil est en phase d'usinage autorisant ainsi à l'équipe d'entretien de modifier le contenu dans l'enceinte par une porte d'accés convenablement agencée, comme on le verra un peu plus loin dans la description.

L'invention concerne aussi le mode de réalisation des moyens de préhension situés périphériquement sur la partie cylindrique du barillet, remarquables en ce qu'ils sont constitués par l'association :
- d'une pince formée de deux branches dont une extrémité est préformée pour encercler les outils sur un axe parallèle à l'axe de rotation du barillet,
- d'un berceau demi-circulaire coaxial au cercle formé par les branches des pinces et dans lequel viennent se loger les outils.

Cette association a pour principal avantage d'assurer une diminution des dimensions des pinces du fait que l'accélération tangentielle du barillet, engendrée lors de sa rotation, soit prise en compte non seulement par une branche des pinces mais aussi par le berceau. En outre, la prise de l'outil en trois points (un sur chaque branche et un sur le berceau) permet une meilleure assise à l'outil. Enfin, lorsque l'outil est pris par les pinces et que le coulant recule suivant l'axe Z pour se dégager, le berceau retient l'outil ce qui permet de soulager la pince qu'une telle opération pourrait endommager.

Le changement d'outil avec le dispositif de l'invention est simple et le suivant. Lorsque l'opération d'usinage par un outil est achevée, le coulant se positionne à hauteur de l'axe du barillet, lequel tourne de façon à ouvrir le magasin et à présenter un emplacement vide pour accueillir l'outil à changer. Le coulant avance alors latéralement vers les pinces de façon à être coaxial avec le berceau et le cercle formé par les extrémités préformées des branches des pinces, de sorte que l'outil s'engage dans le berceau et dans les pinces pour y être retenu prisonnier et puisse être desserré de l'électro-broche dans laquelle il est logé afin d'autoriser le recul de cette dernière. Le coulant reculé, le barillet réalise une deuxième rotation de façon à amener l'outil à utiliser pour la prochaine phase d'usinage coaxial au coulant, qui en avançant fait pénétrer le porte-outil dans l'électro-broche dans laquelle il est bridé de sorte qu'en reculant latéralement, le coulant puisse libérer l'outil de la pince. Cette opération effectuée, une troisième rotation du barillet permet de positionner le volet face à l'ouverture pour fermer le magasin, et la machine-outil peut alors entreprendre la phase d'usinage correspondant à ce deuxième outil.

Les concepts fondamentaux de l'invention venant d'être exposés ci-dessus dans leur forme la plus élémentaire, d'autres détails et caractéristiques ressortiront plus clairement à la lecture de la description qui suit donnant à titre d'exemple non limitatif et en regard des dessins annexés, un mode de réalisation d'un dispositif d'emmagasinage des outils d'une machine-outil d'usinage conforme à l'invention. Cette description se réfère aux dessins annexés sur lesquels :
La figure 1 est une vue en perspective d'ensemble d'une machine-outil aménagée d'un tel dispositif d'emmagasinage d'outils.
La figure 2 est une vue en perspective de ce dispositif d'emmagasinage d'outils.
La figure 3a est une vue en perspective d'un moyen de préhension du dispositif d'emmagasinage.
La figure 3b est une vue en perspective du moyen de préhension du dessin de la figure 3a en prise avec un outil.
Les figures 4a, 4b et 4c sont des vues de dessus illustrant la méthode de rangement par le coulant d'un outil dans le magasin.

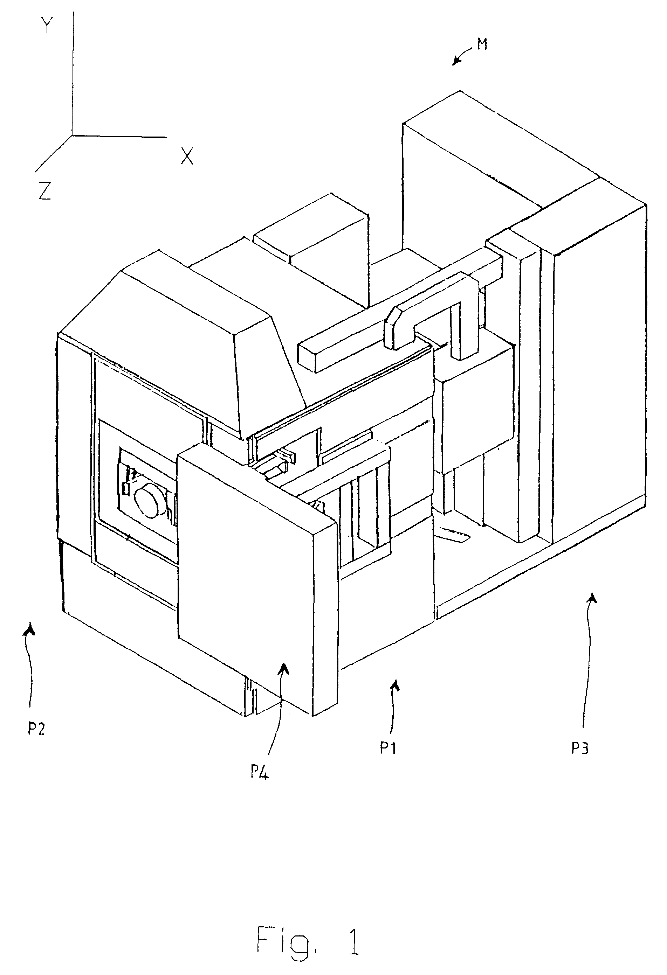

Comme le montre le dessin de la figure 1, la machine-outil référencée M et du type à grande vitesse comporte quatre postes de travail :
- un poste d'entraînement P1,
- un poste d'usinage P2,
- un poste de commande P3,
- et un poste d'emmagasinage d'outils P4.

Le poste d'emmagasinage P4 constitué d'un magasin d'outils peut être disposé à n'importe quel côté de la machine M, que ce soit à droite ou à gauche ou même en haut, dès lors que la disposition est complètement symétrique et que le coulant est mobile suivant trois axes X, Y et Z.

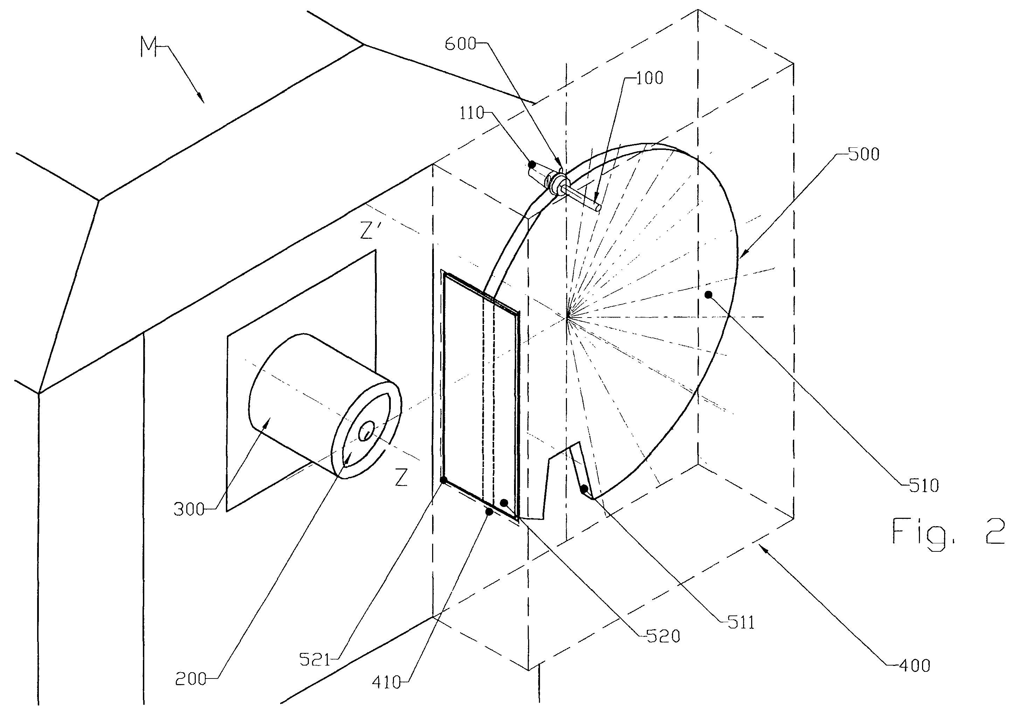

Comme on peut le voir sur le dessin de la figure 2, le magasin d'outils du poste P4 est situé à proximité du poste d'usinage P2 proprement dit comportant l'outil 100 et son porte-outil 110 dans lequel il est logé, entraînés en rotation par l'axe moteur de l'électro-broche 200 emmanchée dans le coulant 300 et façonnant la pièce à usiner ( non représentée). Conformément à l'esprit de l'invention, il est constitué par l'association :
- d'une enceinte parallélépipédique 400 (représentée en traits tirets) associée au bâti de la machine M et dans laquelle est pratiquée une ouverture latérale 410 de forme rectangulaire,
- et d'un barillet 500 qui, entraîné en rotation dans l'enceinte 400 par un moteur suivant un axe Z' parallèle à l'axe Z du coulant 300, comporte une partie 510 servant au stockage des outils 100 et une autre partie 520 servant à garantir l'étanchéité de l'enceinte fixe 400 au niveau de son ouverture latérale d'accès 410.

Ce barillet 500 adopte la forme d'une couronne partiellement coupée selon un plan recevant la partie 520 formant volet de dimensions légèrement supérieures à celles de l'ouverture latérale 410 de l'enceinte 400. L'autre partie cylindrique 510 de la couronne reçoit quant à elle périphériquement des moyens de préhension 600 des outils 100, placés à intervalle angulaire approprié selon la dimension de l'outil.

L'axe de rotation Z' du barillet 500 est avantageusement déporté vers le coulant 300 de machine-outil M par rapport à l'axe de symétrie de l'enceinte 400, de telle façon que pour un angle de rotation préétabli du barillet 500, les moyens de préhension 600 des outils 100 sont disposés à l'extérieur de l'enceinte 400 à travers l'ouverture latérale 410 et que pour un autre angle de rotation préétabli du barillet 500, le volet 520 se présente devant l'ouverture 410 qu'il obture. Afin de rendre hermétique l'enceinte 400 et de protéger dans les meilleures conditions les outils 100 des projections dues à l'usinage, le volet 520 comporte sur son profil des éléments d'étanchéité 521 venant se positionner entre l'enceinte 400 et le volet 520 lorsque celui-ci se trouve face à l'ouverture rectangulaire 410 de l'enceinte 400 en position fermée du magasin. La fermeture, l'ouverture du magasin et la mise à disposition des outils 100 au coulant 300 est donc assurée en fonction de l'angle de rotation du barillet 500, commandé par un programme préétabli. Toujours en ce qui concerne la protection aux projections dues à l'usinage, le mouvement de rotation du barillet 500 pourra être avantageusement utilisé pour empêcher tout dépôt de copeaux de se former à l'intérieur de l'enceinte fixe 400.

Selon une caractéristique particulièrement avantageuse de l'invention, la partie cylindrique 510 du susdit barillet 500 comporte au moins un secteur angulaire dans lequel le moyen de préhension 600 est disposé sur un rayon inférieur au rayon périphérique sur lequel sont disposés les autres moyens de préhension 600, ainsi qu'une encoche 511 sur ce secteur angulaire ci de façon à ce que le coulant 300 puisse atteindre le susdit moyen de préhension 600. Cette disposition permet que des outils de grand diamètre puissent être stockés sur le barillet, ce qui serait impossible à réaliser sur la périphérie du barillet du fait de leur encombrement conséquent et de la présence de l'enceinte fixe 400. Cette encoche 511 donnent ainsi plus de possibilités dans les gammes d'usinage et optimise ainsi la flexibilité de la machine.

Selon une caractéristique particulièrement avantageuse de l'invention, l'enceinte 400 est équipée d'une porte arrière (non visible sur les dessins) qui permet un accès aux outils pendant l'opération d'usinage de la machine-outil pour charger ou décharger le magasin et qui reste fermée pendant un changement d'outil.

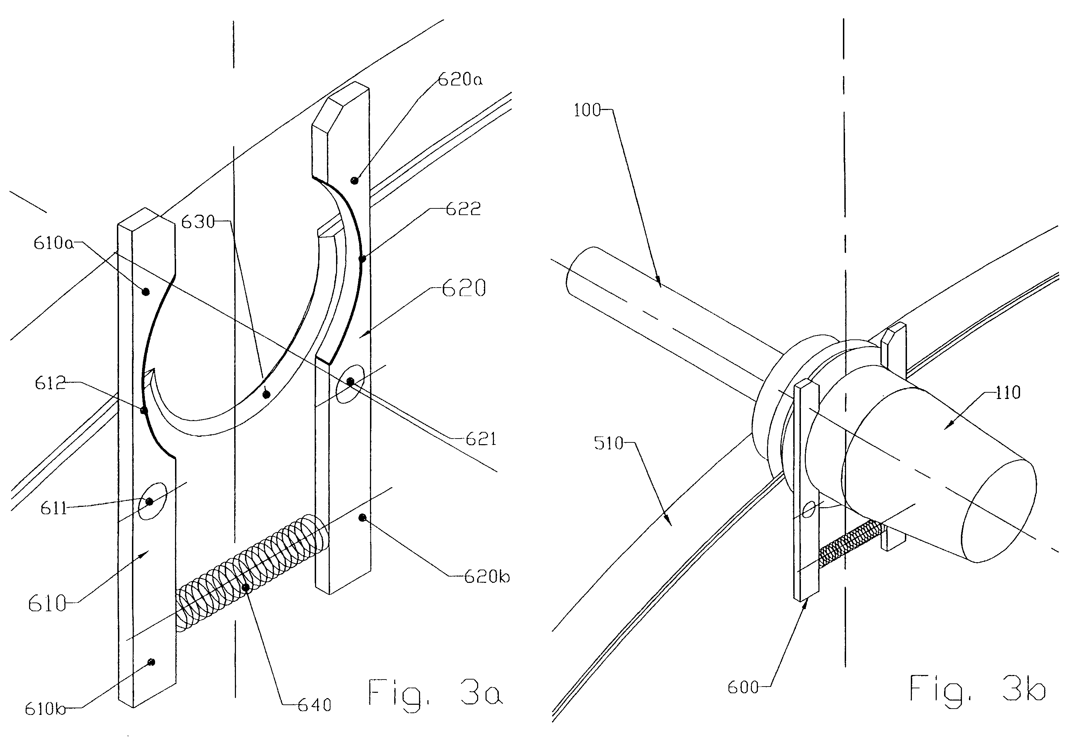

Le dessin de la figure 3a illustre un des moyens de préhension 600 équipant périphériquement la couronne du barillet 500. Ce moyen de préhension 600 est constitué par l'association d'un berceau semi-circulaire 630 solidaire du barillet 500 avec une pince formée de deux branches 610 et 620. Les deux branches 610 et 620 sont montées pivotantes respectivement sur deux axes 611 et 621 solidaires du barillet 500. D'un côté de l'axe 611 ou 621 situé vers l'extérieur de la couronne du barillet 500, les extrémités 610a et 620a de ces deux branches sont préformées pour encercler les porte-outils 110 et de l'autre côté de l'axe 611 ou 621 situé vers l'intérieur de la couronne du barillet 500, les extrémités 610b et 620b sont liées l'une à l'autre au moyen d'un ressort 640 assurant un écartement constant des deux branches en position repos et un serrage du porte-outil 110 lorsque celui-ci est introduit dans le moyen de préhension 600.

Tel que dessiné sur la figure 3b, le porte-outil 110 est formé à sa base d'un cône s'élargissant jusqu'à devenir un cylindre, la forme intérieure des extrémités des branches 610 et 620 accueillant le porte-outil 110 sont de forme circulaire de façon à épouser les formes du porte-outil 110. Selon une caractéristique particulièrement avantageuse de l'invention, les branches 610 et 620 des pinces 600 comportent chacune sur la zone de contact entre le porte-outil 110 et la pince, des éléments de protection en matière plastique 612 et 622 afin d'assurer une meilleure prise de la pince sur le porte-outil 110 mais aussi afin d'éviter des rayures sur les surfaces de référence. Le berceau semi-circulaire 630, coaxial au cercle formé par les extrémités préformées 610a et 620a des branches 610 et 620 des pinces 600, possède un profil en V inversé de façon à s'introduire dans l'épaulement correspondant du porte-outil 110 présentant un profil en V. Ce profil en V a pour avantage de permettre un centrage par l'intermédiaire du porte-outil 110 de l'outil 100 par rapport au barillet 500 et d'assurer une butée au porte-outil 110 lorsque le coulant 300 recule pour libérer l'ensemble outil 100 et porte-outil 110 de l'électro-broche 200 dans laquelle ils étaient logés. Un autre avantage de cette association est que la présence du berceau permet de supporter une partie des accélérations angulaires du barillet 500, évitant ainsi de surdimensionner les pinces.

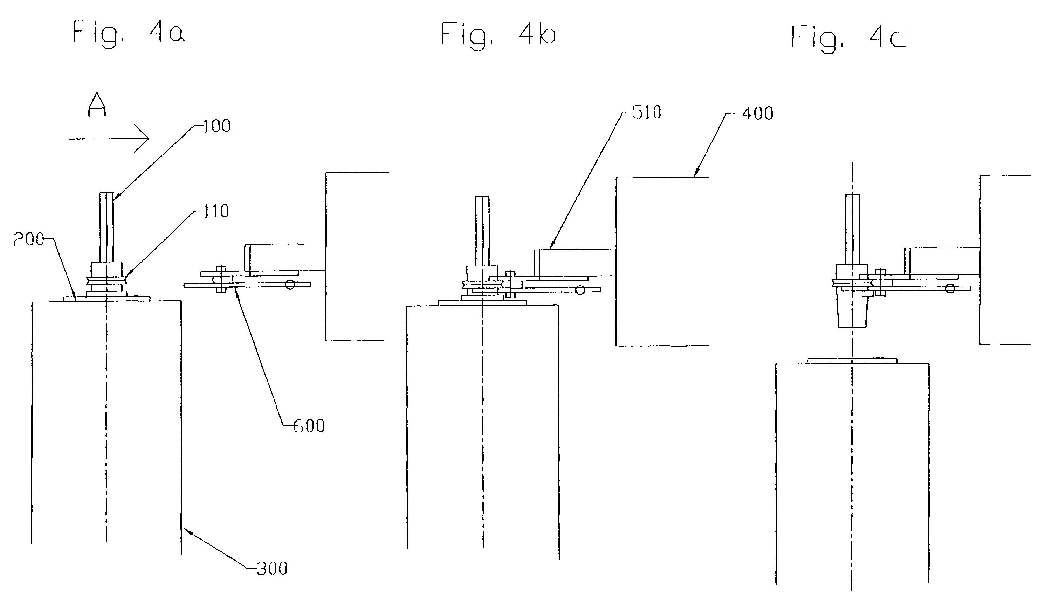

Les figures 4a, 4b et 4c illustrent la procédure de rangement d'un outil 100 avec son porte-outil 110 de l'électro-broche 200 sur le dispositif d'emmagasinage P4.

Comme mentionné au début de la présente description, la mobilité du coulant (300) suivant les axes X, Y et Z donne la possibilité de disposer le magasin P4 à n'importe quel endroit autour du coulant 300, mais en respectant un éloignement des axes des outils stockés lorsque le magasin est en position ouverte, inférieur à la course maximale du coulant 300 et une position de l'axe Z' du barillet 500 parallèle à l'axe Z du coulant 300.

Ainsi, comme montré sur le dessin de la figure 4a, le coulant 300 vient se mettre à hauteur de l'axe du barillet 500, de façon à ce que le cylindre du porte-outil 110 soit face aux branches 610 et 620 des pinces et que l'épaulement ayant une gorge en V soit face au berceau semi-circulaire 610. Le barillet 500 amorce une rotation pour dégager le volet 520 devant l'ouverture latérale 410 et présenter un moyen de préhension 600 libre devant l'outil 100 à ranger. La phase suivante illustrée par le dessin de la figure 4b consiste à faire déplacer le coulant 300 latéralement selon la flèche A vers l'ouverture 410 de l'enceinte 400 jusqu'à ce que le coulant soit coaxial au berceau 630 et au cercle formé par les extrémités préformées 610a et 620a des branches 610 et 620 de la pince, de façon à ce que le porte-outil 110 et l'outil 100 soient alors en prise avec le moyen de préhension 600. Le porte-outil 110 est alors desserré de l'électro-broche 200 afin qu'en reculant (cf. figure 4c) le coulant 300 libère le porte-outil 110 qui reste dans le moyen de préhension 600. Le barillet 500 engage une deuxième rotation de façon à présenter, coaxialement au coulant 300 en retrait, un nouvel outil 100 logé dans un nouveau porte-outil 110. Le coulant 300 avancera alors jusqu'à ce que le porte-outil 110 soit emmanché dans l'électro-broche 200 dans laquelle il sera bridé, puis il reculera latéralement pour libérer le porte-outil 110 et donc l'outil 100 du moyen de préhension 600. Le barillet 500 est animé d'une troisième rotation le ramenant à sa position initiale qui consiste à positionner le volet 520 face à l'ouverture 410 de façon à fermer l'enceinte 400 du magasin. La machine-outil M peut alors continuer son opération d'usinage.

On comprend que le dispositif d'emmagasinage des outils d'une machine-outil d'usinage qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges. Ainsi, par exemple un système de capteurs détectant la présence des outils dans les berceaux pourra être utilisé pour éviter qu'un outil ne soit placé dans un moyen de préhension déjà en prise avec un outil et son porte-outil.

Afin de permettre une meilleure compréhension des dessins, une liste des références avec leurs légendes est ci-aprés énumérée
- M: Machine-outil
- P1: Poste d'entraînement
- P2: Poste d'usinage
- P3: Poste de commande
- P4: Poste d'emmagasinage
- 100: Outil (taraud, foret, fraise..)
- 110: Porte-outil standard
- 200: Electro-broche
- 300: Coulant
- 400: Enceinte fixe du magasin
- 410: Ouverture de l'enceinte
- 500: Barillet
- 510: Partie cylindrique du barillet
- 511: Encoche réalisée dans le barillet
- 520: Partie rectangulaire plane du barillet
- 521: Joints d'étanchéité
- 600: Dispositif de préhension
- 610: Branche de la pince
- 620: Branche de la pince
- 610a,620a: Extrémités préformées des branches
- 610b,620b: Extrémités libres des branches
- 611: Axe de rotation de la branche
- 612: Partie plastique de la zone de contact
- 621: Axe de rotation de la branche
- 622: Partie plastique de la zone de contact
- 630: Berceau semi-circulaire
- 640: Ressort des extrémités libres 610b, 620b
- Flèche A: Sens d'avancement du coulant 300

## Revendications

1. Dispositif d'emmagasinage des outils d'une machine-outil d'usinage disposé à proximité du coulant (300), **CARACTERISE PAR LE FAIT QU'**il est constitué par l'association :
- d'une enceinte fixe (400) comportant une ouverture (410) et associée au bâti de la machine-outil (M),
- d'un barillet (500) tournant dans l'enceinte fixe (400) entraîné en rotation par un moteur suivant un axe (Z') parallèle à l'axe (Z) du coulant (300) et comportant une partie (510) servant au rangement des outils (100) et une autre partie (520) servant à l'étanchéité de l'enceinte fixe (400).

2. Dispositif d'emmagasinage selon la revendication 1, **CARACTERISE PAR LE FAIT QUE** le susdit barillet (500) est constitué de deux parties :
- une partie cylindrique (510) comportant périphériquement des moyens de préhension (600) des outils (100) disposés à intervalle angulaire approprié,
- une partie (520) formant volet, solidaire du barillet (500) et tournant avec celui-ci, dont le profil et les dimensions s'ajustent au profil et aux dimensions de la susdite ouverture (410) réalisée dans l'enceinte fixe (400) à des fins d'obturation de celle-ci.

3. Dispositif d'emmagasinage selon la revendication 1, **CARACTERISE PAR LE FAIT QUE** la susdite ouverture (410) pratiquée dans la susdite enceinte fixe (400) dans laquelle évolue le barillet (500) est latérale et se situe du côté coulant (300).

4. Dispositif d'emmagasinage selon les revendications 1 et 2, **CARACTERISE PAR LE FAIT QUE** le susdit barillet (500) adopte la forme d'une couronne partiellement coupée selon un plan recevant ledit volet (520), l'autre partie cylindrique (510) de la couronne recevant périphériquement les susdits moyens de préhension (600).

5. Dispositif d'emmagasinage selon les revendications 1 et 2, **CARACTERISE PAR LE FAIT QUE** les susdits moyens de préhension (600) sont constitués par l'association :
- d'une pince formée de deux branches (610, 620) dont une extrémité (610a, 620a) est préformée pour encercler les porte-outils (110) dans lesquels sont logés les outils (100) sur un axe parallèle à l'axe de rotation du barillet (500),
- et d'un berceau demi-circulaire (630) coaxial au cercle formé par les branches des pinces et dans lequel viennent se loger les porte-outils (110).

6. Dispositif d'emmagasinage selon les revendications 1, 2 et 3, **CARACTERISE PAR LE FAIT QUE** le susdit volet (520) du barillet (500) venant s'ajuster à l'ouverture (410) de la susdite enceinte (400) comporte sur son profil des éléments d'étanchéité (521) venant se mettre en contact entre le volet (520) et l'enceinte (400) lorsque celui-ci est en position devant l'ouverture (410).

7. Dispositif d'emmagasinage selon les revendications 1, 2, 3 et 4 prises ensemble, **CARACTERISE PAR LE FAIT QUE** l'axe de rotation (Z') du barillet (500) est déporté vers le coulant (300) par rapport à l'axe de symétrie de l'enceinte (400) de sorte que les moyens de préhension (600) dépassent de l'enceinte (400) par l'ouverture (410) dans un angle de rotation du barillet (500) et que le volet (520) du barillet (500) s'ajuste à ladite ouverture (410) pratiquée dans l'enceinte (400) dans une position angulaire donnée du barillet (500).

8. Dispositif d'emmagasinage selon les revendications 1, 2, 3, 4 et 5 prises ensemble, **CARACTERISE PAR LE FAIT QUE** la partie cylindrique (510) du susdit barillet (500) comporte au moins un secteur angulaire dans lequel le moyen de préhension (600) est disposé sur un rayon inférieur au rayon périphérique sur lequel sont disposés les autres moyens de préhension (600),ainsi qu'une encoche (511) sur ce secteur angulaire ci de façon à ce que le coulant (300) puisse atteindre le susdit moyen de préhension (600).

9. Dispositif d'emmagasinage selon la revendication 5, **CARACTERISE PAR LE FAIT QUE** les deux branches (610, 620) desdites pinces sont chacunes articulées sur un axe (611, 621) solidaire de la partie cylindrique (510) du barillet (500) et parallèle à l'axe de celui-ci, et **PAR LE FAIT QUE** que les extrémités (610b,620b) desdites branches (610,620) opposées aux extrémités préformées (610a, 620a) sont retenues par un ressort (640) assurant un écartement minimum des branches (610, 620) et un serrage de l'outil (100) quand il s'introduit entre les extrémités préformées (610a, 620a).

10. Dispositif d'emmagasinage selon la revendication 5, **CARACTERISE PAR LE FAIT QUE** les deux branches (610,620) comportent sur chacune de leur extrémité préformée (610a,620a) sur la partie venant en contact avec le porte-outil (110) dans lequel est logé l'outil (100), des éléments de protection en plastique (612,622).

11. Dispositif d'emmagasinage selon les revendications 1 à 10 prises ensemble, **CARACTERISE PAR LE FAIT QUE** l'enceinte (400) comporte une ouverture sur son arrière qui ne s'ouvre que lorsque la machine-outil d'usinage n'est pas en phase de changement d'outil.

## Patentansprüche

1. Lagervorrichtung für Werkzeuge einer spanend bearbeitenden , in der Nähe des Halters (300) liegenden Werkzeugmaschine, **dadurch gekennzeichnet**, dab sie folgendes vereinigt:
- eine ortsfeste, eine Öffnung (410) aufweisende und dem Werkzeugmaschinenkörper (M) zugeordnete Einfassung (400),
- eine Trommel (500), die in der ortsfesten Einfassung (400) durch einen Motor in Bezug auf eine zur Achse (Z) des Halters (300) parallelen Achse (Z') in Rotation versetzt wird und einen, zum Aufräumen (510) der Werkzeuge (100) und einen anderen zum Abdichten (520) der festen Einfassung (400) dienden Teil.

2. Lagervorrichtung nach Anspruch 1, **dadurch gekennzeichnet**, dab die obengenannte Trommel (500) aus zwei Teilen besteht:
- einem zylindrischen Teil (510), der auf dem Umfang in geeigneten Winkelabständen angeordnete Greifmittel (600) für Werkzeuge (100) aufweist,
- einem klappenförmigen, mit der Trommel (500) einstückigen und sich zusammen mit dieser drehenden Teil (520) , dessen Profil und Abmessungen sich dem Profil und den Abmessungen der obengenannten in der ortsfesten Einfassung (400) durchgeführten und als deren Verschlub dienden Öffnung (410) anpassen.

3. Lagervorrichtung nach Anspruch 1, **dadurch gekennzeichnet**, dab die obengenannte, in der obengenannten ortsfesten Einfassung (400) eingearbeitete Öffnung (410), in der sich die Trommel (500) bewegt, lateral und auf Seiten des Halters (300) liegt.

4. Lagervorrichtung nach Anspruch 1 und 2, **dadurch gekennzeichnet**, dab die obengenannte Trommel (500) die Form einer teilweise in einer Ebene liegenden Krone, welche obengenannte Klappe (520) aufnimmt, wobei der andere zylindrische Teil (510) der Krone am Umfang die obengenannten Greifmittel (600) aufnimmt .

5. Lagervorrichtung nach Anspruch 1 und 2, **dadurch gekennzeichnet**, dab die obengenannten Greifmittel (600) folgendes vereinigen:
- eine aus zwei Armen (610, 620) gebildete Zange, von denen ein Ende (610a, 620a) so 5 vorgeformt ist, dab es die Werkzeughalter (110) in denen das Werkzeug (100) auf einer zur Drehachse der Trommel (500) parallelen Achse gelagert ist, umgreift,
- und einen halbkreisförmigen Schlitten (630) in dem die Werkzeughalter (410) gelagert werden und welcher koaxial zum von den Armen der Zangen gebildeten Kreis ist.

6. Lagervorrichtung nach Anspruch 1, 2 und 3, **dadurch gekennzeichnet**, dab die obengenannte Klappe (520) der Trommel (500), die sich an die Öffnung (410) der obengenannten Einfassung (400) anpabt, auf ihrem Profil Abdichtelemente (521) aufweist, die zwischen der Klappe (520) und der Einfassung (400) in Kontakt treten, sobald sich die Klappe (400) vor der Öffnung (410) befindet.

7. Lagervorrichtung nach Anspruch 1, 2, 3 und 4, **dadurch gekennzeichnet**, dab die obengenannte Drehachse (Z') der Trommel (500) in Bezug auf die Symmetrieachse der Einfassung (400) zum Halter (300) hin versetzt ist, so dab die Greifmittel (600) aus der Einfassung (400) durch die Öffnung (410) bei einem Drehwinkel der Trommel (500) herausragen und dadurch , dab die Klappe (520) der Trommel (500) sich in einer gegebenen Winkelstellung der Trommel (500) an die in der Einfassung (400) eingearbeitete Öffnung (410) anpabt.

8. Lagervorrichtung nach Anspruch 1, 2, 3, 4 und 5, **dadurch gekennzeichnet**, dab der zylindrische Teil (510) der obengenannten Trommel (500) mindestens einen Winkelsektor aufweist, in dem das Greifmittel (600) auf einem niedrigeren Radius als dem des Umfangs auf dem die andern Greifmittel (600) angeordnet sind , angeordnet ist und auf diesem Winkelsektor eine Kerbe (510) aufweist, so dab der Halter (300) die besagten Greifmittel (600) erreichen kann.

9. Lagervorrichtung nach Anspruch 5, **dadurch gekennzeichnet**, dab die beiden Arme (610, 620) der besagten Zangen jeweils an einer mit dem zylindrischen Teil (510) mit der Trommel (500) einstückigen und zu dieser parallelen Achse (611, 621) angelenkt sind und dadurch dab die Enden (610b, 620b) durch eine Feder (640) zurückgehalten werden, wodurch ein Mindestabstand zwischen den Armen (610, 620) und ein Festspannen des Werkzeuges (100) wenn es zwischen die vorgeformten Enden (610a, 620a) eingeführt wird, sichergestellt wird.

10. Lagervorrichtung nach Anspruch 5, **dadurch gekennzeichnet**, dab die beiden Arme (610, 620) auf jedem ihrer vorgeformten Enden (610a, 620a) auf dem Teil der in Kontakt mit dem Werkzeughalter (110) in dem das Werkzeug (100) lagert, tritt, Schutzteile aus Kunststoff (612, 622) aufweisen.

11. Lagervorrichtung nach den Ansprüchen 1 bis 10, **dadurch gekennzeichnet**, dab die Einfassung (400) auf ihrer Rückseite eine Öffung aufweist, die sich nur öffnet, wenn die spanend bearbeitende Werkzeugmaschine sich nicht in Werkzeugwechselstellung befindet.

## Claims

1. A storage device for machine tools situated near the ram (300) wherein it is constituted by the association of :
- a fixed chamber (400) comprising an opening (410) and associated with the frame of the machine tool (M),
- a cylinder (500) revolving in the fixed chamber (400) rotatably driven by a motor driven along an axis (Z') parallel to the axis (Z) of the ram (300) and comprising a part (510) for the storage of tools (100) and another part (520) for maintaining the seal of the fixed chamber (400).

2. Storage device according to claim 1, wherein said cylinder (500) is constituted by two parts :
- a cylindrical part (510) comprising peripheral gripping means (510) of the tools (100) placed at appropriated angular intervals,
- a part (520) making a flap, integral with the cylinder (500) and revolving with it, its profile and dimensions adapting to the profile and the dimensions of the said opening (410) made in the fixed chamber (400) in order to seal this chamber.

3. Storage device according to claim 1, wherein the said opening (410) made in the said fixed chamber (400) in which the cylinder moves, is lateral and is situated on the side of the ram (300).

4. Storage device according to claims 1 and 2, wherein the said cylinder (500) takes the shape of a partially cut crown according to a plan receiving the said flap (520), the other cylindrical part (510) of the crown receiving peripherically the said gripping means (600).

5. Storage device according to claims 1 and 2, wherein the said gripping means (600) are constituted by the association of :
- a clamping device made up of two arms (610, 620) of which one end (610a, 620 a) is pre-shaped to encircle the tool carriers (110) in which the tools (100) are housed on an axis parallel to the rotation axis of the cylinder (500),
- and of a semicircular cradle (630) in line with the circle made up by the arms of the clamping device in which the tool carriers (110) come into place.

6. Storage device according to claims 1, 2 and 3, wherein the said flap (520) of the cylinder (500) which comes to fit into opening (410) comprises on its profile, sealing elements (521) coming into contact between the said flap (520) and the chamber (400) when the said flap is in position in front of the opening (410).

7. Storage device according to claims 1, 2, 3 and 4 taken together, wherein the rotation axis (Z') of the cylinder (500) is carried towards the ram (300) in relation to the symetrical axis of the chamber (400) in such a way that the gripping means (600) stick outside chamber (400) through the opening (410) in an angle of rotation of cylinder (500), and the flap (520) of the cylinder (500) fits into the said opening (410) made in the chamber (400) in a given angular position of the cylinder (500).

8. Storage device according to claims 1, 2, 3, 4 and 5 taken together, wherein the cylindrical part (510) of the said cylinder (500) comprises at least one angular area in which the gripping means (600) is placed on a radius lower than the peripheral radius on which are placed the other gripping means (600), as well as a slot (511) on this angular area to enable the ram (300) to reach the said gripping means (600).

9. Storage device according to claim 5, wherein both arms (610, 620) of the said clamping device are each articulated on an axis (611, 621) integral with the cylindrical part (510) of the cylinder (500) and parallel to the axis of the cylinder, and wherein the ends (610b, 620b) of the said arms (610, 620) opposite to the pre-shaped ends (610a, 620a) are maintained by a spring (640) ensuring a fixed opening of the arms (610, 620) and a clamping of the tool (100) when it is entered in the pre-shaped ends (610a, 620a).

10. Storage device according to claim 5, wherein both arms (610, 620) comprise on each of their pre-shaped ends (610a, 620a) on the part coming into contact with the tool carrier (110) in which the tool (100) is housed, protection elements made of plastic (612, 622).

11. Storage device according to claims 1 to 10 taken together, wherein the chamber (400) comprises a rear opening which only opens when the machine tool in not in the course of a tool exchange.
